Europäisches Patentamt

European Patent Office

Office européen des brevets

(11) Publication number: **0 455 323 A2**

# EUROPEAN PATENT APPLICATION

(21) Application number: 91301429.6

(51) Int. Cl.5: **C08J 5/02**, //C08L21:00

(22) Date of filing: 22.02.91

(30) Priority: 23.04.90 GB 9009097

(43) Date of publication of application:
06.11.91 Bulletin 91/45

(84) Designated Contracting States:
DE FR GB IT

(71) Applicant: **LRC PRODUCTS LIMITED**
**North Circular Road**
**Chingford, London E4 8QA(GB)**

(72) Inventor: **Potter, William Duncan**
**28 Ashmead Drive**
**Hardwick, Cambridge CB3 7XT(GB)**

(74) Representative: **Spencer, Graham Easdale et al**
**A.A. Thornton & CO Northumberland House**
**303-306, High Holborn**
**London WC1V 7LE(GB)**

(54) Method of making dipped rubber articles.

(57) A method of making a flexible rubber article having a lubricating layer formed from a hydrogel polymer and a surfactant bonded thereto so as to provide a skin-contacting surface of the article comprises:

(a) forming the rubber article by dipping a suitably shaped former in a rubber latex, and drying, leaching, and acid priming the article on the former,

(b) dipping the article, on the former, in a solution containing a hydrophilic, hydrogel-forming polymer, a curing agent therefor, and a surfactant,

(c) heating the coated article on the former to effect drying and then curing of the hydrogel polymer and vulcanisation of the rubber, and

(d) stripping the resulting article from the former.

This invention is concerned with the manufacture of dipped rubber articles, such as rubber gloves and condoms, and is more particularly concerned with the production of such articles having a lubricant coating on a skin-contacting surface.

In European Patent 0105613B there is described a flexible rubber article having a lubricating layer formed from a hydrogel polymer bonded there to so as to provide a skin-contacting surface of the article, in which a surfactant material or a long chain fatty amine has been applied to the skin-contacting surface so as to substantially improve the lubricity of that surface with respect to damp skin. The patent further describes a method of making such articles which comprises forming a coating of rubber latex on a suitably shaped former by dipping and then drying, and before completing vulcanisation of the rubber, applying a solution of a hydrophilic, hydrogel-forming polymer and a curing agent for the polymer to the rubber coating, preferably by dipping the former into such solution, heating the material on the former to effect drying and then curing of the hydrogel polymer and vulcanisation of the rubber, stripping the resulting article from the former and then applying a solution of the surfactant or long chain fatty amine and, preferably, a silicone, to the hydrogel coating and heating the coated article to fix the slip properties of the coating.

It will be seen that a feature of this process is that the surfactant is applied to the article as a separate, later, step after the formation of the hydrogel coating and this was considered to be an essential feature of the process.

We have surprisingly found that the surfactant can be applied to the article with the hydrogel, that is in the solution containing the hydrogel-forming polymer and the curing agent therefor. The lubricity of the articles, such as rubber gloves, made in this way with respect to damp skin is not quite as good as that of articles made in the way described in the patent, but the manufacturing process is substantially simplified and thus cheapened by incorporating the surfactant with the hydrogel rather than as a separate step.

There is no discernible difference between the dry skin lubricity of articles made by the modified process and those made by the process described in the patent.

According to the present invention, there is provided a method of making a flexible rubber article having a lubricating layer formed from a hydrogel polymer and a surfactant bonded thereto so as to provide a skin-contacting surface of the article, which comprises:

(a) forming the rubber article by dipping a suitably shaped former in a rubber latex, and drying, leaching, and acid priming the article on the former,

(b) dipping the article, on the former, in a solution containing a hydrophilic, hydrogel-forming polymer, a curing agent therefor, and a surfactant,

(c) heating the coated article on the former to effect drying and then curing of the hydrogel polymer and vulcanisation of the rubber, and

(d) stripping the resulting article from the former.

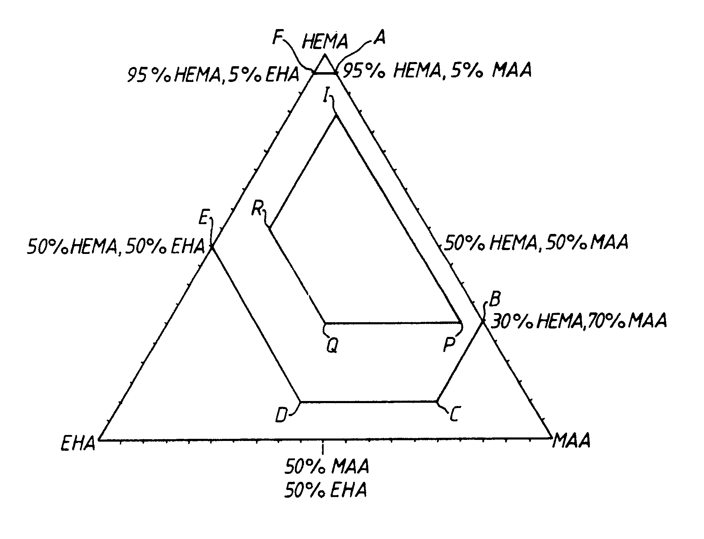

Preferred hydrogel polymers for use in this method are the same as the preferred hydrogel polymers described on the above-mentioned patent, that is copolymers of 2-hydroxyethyl methacrylate (HEMA) with methacrylic acid (MAA) and/or with 2-ethylhexyl acrylate (EHA) having a composition within the area ABCDEF of the ternary composition diagram which forms the single figure of the accompanying drawing and, more preferably, within the area PQRI of said diagram. The characteristics of such copolymers are described in the patent.

Suitable curing agents for such hydrogel polymers are described in the above-mentioned patent and include for example, partially methylated melamine-formaldehyde resins which are normally used in conjunction with para-toluene sulphonic acid as a catalyst.

The hydrogel polymer dipping solution preferably contains from 3 to 10% by weight of hydrogel polymer, more preferably 4% by weight, and from 5 to 15 parts per hundred (pph), based on the weight of the polymer, of the curing agent and from 0.5 to 1.5 pph of the curing agent catalyst.

Suitable solvents for the hydrogel polymer solution are alcohols, a preferred such solvent being industrial methylated spirits (IMS), also known as denatured alcohol.

The surfactant used in the method according to the invention is preferably ionic and cationic surfactants are particularly preferred. Such cationic surfactants may have a free anion, such as halide ion, or the anion may be part of the molecular structure of the surfactant, that is the latter has a betaine structure.

Preferred cationic surfactants are quaternary ammonium compounds having at least one 6-18C hydrocarbyl (alkenyl or alkyl) group; a preferred hydrocarbyl group is a hexadecyl group. It is further preferred that the hydrocarbyl group is attached to a quaternary nitrogen atom which is part of a heterocyclic ring, such as a pyridine, morpholine or imidazoline ring.

The most preferred cationic surfactants are hexadecyl trimethyl ammonium chloride, N-lauryl pyridinium chloride, N-cetyl pyridinium chloride, the corresponding bromides, and hydroxyethyl heptadecenyl imidazoline salts.

2

Non-ionic and anionic surfactants may be used instead of cationic surfactants; examples of suitable non-ionic surfactants include ethylene oxide condensates, such as polyethylene oxide, ethylene oxide-polypropylene glycol condensates, and polyglycol-polyamine condensates. An example of a suitable anionic surfactant is sodium lauryl sulphate.

The use of cationic surfactants serves to inhibit bacterial growth when the layer formed from the hydrogel polymer is in contact with the skin; this is an advantage for surgeon's gloves because, as mentioned above, these are sometimes punctured during surgical procedures, and any bacteria which have grown on the surgeon's skin since commencement of the operation may be released into the surgical field.

The amount of surfactant present in the hydrogel polymer dipping solution is suitably from 0.2 to 5.0% by weight.

In order that the invention should be more fully understood, the following example is given by way of illustration only.

Example.

Surgeons gloves were made by dipping suitably shaped formers in a conventional prevulcanised rubber latex, withdrawing the formers from the latex, partially drying the latex coating on the formers, leaching the rubber by dipping the formers into water at a temperature of 70°C for 4 minutes, priming the rubber surface by dipping into 0.6% w/v aqueous hydrochloric acid for 15 seconds, rinsing by dipping into water, and then dipping the formers in a hydrogel polymer solution.

The solution contained 4% by weight of a copolymer consisting of 68 mole % HEMA, 14 mole % MAA and 18 mole % EHA, in industrial methylated spirits (denatured alcohol). The solution further contained:

10    pph partially methylated melamine-formaldehyde resin (Cymel 370; Trade Mark),

1.0    pph para-toluene sulphonic acid (Cycat 4040; Trade Mark), and cetyl pyridinium chloride (CPC).

Two runs were carried out, one with 0.5% w/v CPC and the second with 5.0% w/v CPC in the hydrogel dipping solution.

The formers were withdrawn from the hydrogel dipping solution and heated for 10 minutes at 90°C and then for 15 minutes at 120°C to effect drying and then curing of the hydrogel and vulcanisation of the rubber.

The gloves were then stripped from the formers.

By way of comparison surgeons gloves were made from the same latex using the procedure of European Patent 0105613B and, as far as applicable, the same materials and process conditions as described above. The hydrogel polymer dipping solution did not contain CPC and the latter was applied to the hydrogel coating after the curing of the latter by dipping the gloves in an aqueous slurry containing 0.5% by weight of CPC.

The damp slip (i.e. lubricity with respect to damp skin) was assessed subjectively by a panel of four testers using the following scale of ratings to assess ease of donning:

1 =    very easily

2 =    easily

3 =    moderately easy

4 =    with difficulty

5 =    with great difficulty

The results obtained were as follows:

| Tester | Known process (0.5% CPC slurry) | 0.5% CPC in hydrogel soln. | 5% CPC in hydrogel soln. |
|---|---|---|---|
| A | 2 | 4 | 3 |
| B | 3 | 3.5 | 4 |
| C | 2 | 4 | 4 |
| D | 2 | 3.5 | 4 |

It will be seen that the damp slip ratings with both levels of CPC addition were worse with the process of the present invention than with the process of the European patent, but the loss of this quality is likely to be acceptable for some markets where the reduction in manufacturing costs will enable the products to be sold more cheaply.

**Claims**

1. A method of making a flexible rubber article having a lubricating layer formed from a hydrogel polymer and a surfactant bonded thereto so as to provide a skin-contacting surface of the article, which comprises:
   (a) forming the rubber article by dipping a suitably shaped former in a rubber latex, and drying, leaching, and acid priming the article on the former,
   (b) dipping the article, on the former, in a solution containing a hydrophilic, hydrogel-forming polymer, a curing agent therefor, and a surfactant,
   (c) heating the coated article on the former to effect drying and then curing of the hydrogel polymer and vulcanisation of the rubber, and
   (d) stripping the resulting article from the former.

2. A method according to claim 1, in which the hydrogel polymer is a HEMA/MAA/EHA copolymer whose composition falls within the area ABCDEF of the ternary composition diagram of the accompanying drawing.

3. A method according to claim 2, in which the hydrogel polymer is a HEMA/MAA/EHA copolymer whose composition falls within the area PQRI of the ternary composition diagram.

4. A method according to any of claims 1 to 3, in which the hydrogel polymer dipping solution contains from 3 to 10% by weight of the hydrogel polymer and from 0.2 to 5.0% by weight of the surfactant.

5. A method according to any of claims 1 to 4, in which the surfactant is a quaternary ammonium cationic surfactant having at least one 6-18C hydrocarbyl group.

6. A method according to claim 5, in which the hydrocarbyl group of the surfactant is attached to a quaternary nitrogen atom which is part of a heterocyclic ring.

7. A method according to any of claims 1 to 6, in which the surfactant is hexadecyl trimethyl ammonium chloride, N-lauryl pyridinium chloride, N-cetyl pyridinium chloride, a bromide corresponding to any of said chlorides, or a hydroxyethyl heptadecenyl imidazoline salt.